# EUROPÄISCHE PATENTSCHRIFT

(11) **EP 0 765 595 B1**
(45) Veröffentlichungstag und Bekanntmachung des Hinweises auf die Patenterteilung: **31.03.1999**
(21) Anmeldenummer: 96112481.5
(22) Anmeldetag: 02.08.1996
(51) Int. Cl.: A01D 69/10

(54) **Mähvorrichtung**
Mowing apparatus
Appareil faucheur

(30) Priorität: 30.09.1995 DE 29515634 U
(43) Veröffentlichungstag der Anmeldung: 02.04.1997
(73) Patentinhaber: Maschinenfabrik Kemper GmbH & Co. KG, 48703 Stadtlohn (DE)
(72) Erfinder: Wübbels, Richard, 46325 Borken (DE); Resing, Alfons, 48703 Stadtlohn (DE)
(74) Vertreter: Busse & Busse Patentanwälte

(56) Entgegenhaltungen:
- EP-A- 0 525 972
- DE-A- 2 733 635
- US-A- 3 908 344
- US-A- 4 466 233

## Beschreibung

Die Erfindung betrifft eine Mähvorrichtung mit einem um eine vertikale Achse umlaufenden Mähwerkzeug, das über ein einen Freilauf umfassendes Getriebe von einer drehfest mit dem Freilauf verbundenen Antriebswelle über Mitnehmerbolzen antreibbar ist, die in zur Drehachse des Mähwerkzeugs paralleler Grundausrichtung eine Mitnahmeverbindung zwischen dem Freilauf und dem Mähwerkzeug für dessen Antrieb herstellen und bei einem Stillsetzen der Antriebswelle mitsamt dem Freilauf eine Hubbewegung ausführen, die die Mitnahmeverbindung des Mähwerkzeugs mit dem Freilauf unterbricht.

Solche Mähvorrichtungen werden zum Mähen von stengelartigem Erntegut in Mähmaschinen mit üblicherweise zumindest zwei solcher Mähvorrichtungen als Selbstfahrer oder aber auch als Anbaugerät für einen Schlepper verwendet, wobei dieser außerdem einen Häcksler zum Häckseln von Ganzpflanzensilagegut wie insbesondere Mais umfassen kann. Für dieses Erntegut sind Mähvorrichtungen in Gebrauch, die mit Einzugstrommeln kombiniert sind, die das mit den Mähwerkzeugen geschnittene Erntegut dem Häcksler zuführen.

Während die Einzugstrommeln mit geringer Umfangsgeschwindigkeit umlaufen und daher bei einem Abschalten der Maschine und dem damit einhergehenden Unterbrechen ihrer Antriebsverbindung in kurzer Zeit zum Stillstand kommen, haben die Mähwerkzeuge der Mähvorrichtungen in Form von Kreismessern oder Sägerotoren sehr hohe Umlaufgeschwindigkeiten, die, in Abhängigkeit von der Rotorgröße, beispielsweise etwa 500 bis 1500 U/min betragen können. Wird die Antriebswelle des Mähwerkzeugs, beispielsweise durch Wegnehmen des Schleppergases bei einem Stau in der Abförderung des Erntegutes zum Stillstand gebracht, so bewirkt die Schwungmasse des schnellaufenden Mähwerkzeugs je nach dessen Größe, daß es verhältnismäßig lange, z.B. etwa 30 - 150 sec nachläuft. Dieses kann beim Herantreten an die Mähvorrichtungen zu Schnittverletzungen führen.

Um dies zu vermeiden, sind bereits in Verbindung mit Mähvorrichtungen bzw. Kreiselmähwerken Bremseinrichtungen bekannt geworden, die hydraulisch oder elektrisch betätigt werden. Hierzu sind gesonderte, externe Kraftquellen und elektrische bzw. Hydraulikschaltungen erforderlich, die die Mähvorrichtung komplizieren und im rauhen landwirtschaftlichen Erntebetrieb äußerst störanfällig sind.

Der Erfindung liegt daher die Aufgabe zugrunde, eine Mähvorrichtung der eingangs angegebenen Art in der Weise auszubilden, daß eine Bremsung des Mähwerkzeugs ohne Zuhilfenahme externer Antriebe und Kraftquellen allein auf mechanischem Wege mit einem hohen Maß an Zuverlässigkeit erreicht wird.

Diese Aufgabe wird nach der Erfindung im Prinzip dadurch gelöst, daß die Hubbewegung, die die Mitnahmebolzen bei einem Stillsetzen der Antriebswelle zur Unterbrechung der Mitnahmeverbindung zwischen Freilauf und Mähwerkzeug ausführen, zur Aktivierung einer Bremseinrichtung ausgenutzt wird, die nach der Erfindung im Bereich der Innenseite des Getriebegehäuses oberhalb des Freilaufs gebildet ist. Dies geschieht dadurch, daß auf der Oberseite der Mitnehmerbolzen eine ringförmige Druckplatte angeordnet ist, die bei der Hubbewegung der Mitnehmerbolzen gegen die Bremseinrichtung auf der Innenseite des Getriebegehäuses arbeitet.

Die Bremskraft, die von der Bremseinrichtung auf der Innenseite des Getriebegehäuses auf ein Antriebszahnrad des Mähwerkzeugs bzw. ein gemeinsam mit diesem umlaufendes, eine geeignete Bremsscheibe tragendes Mitnehmerteil ausgeübt wird, ist vorzugsweise zur Aufbringung verschiedener Bremsmomente entsprechend den Bremsbedingungen federelastisch einstellbar. Hierzu kann zwischen zwei zwischen sich die Bremsscheibe in einem Spalt aufnehmenden gehäuseseitigen horizontalen Bremsgegenscheiben ein Preßdruck unter Federbelastung erzeugt werden, der den Reibungswiderstand für die Bremsscheibe und damit die Bremswirkung bestimmt. Anstelle horizontaler, gehäuseseitiger Bremsgegenscheiben, die zwischen sich die Bremsscheibe aufnehmen, ist auch eine Ausgestaltung denkbar, bei der die Bremsscheibe über eine entsprechende Mitnahmeeinrichtung mit dem Antriebszahnrad für das Mähwerkzeug in einer Umfangsebene umläuft und gegen eine Bremsgegenfläche am Innenumfang des Getriebegehäuses arbeitet, wobei auch in diesem Fall die Bremskraft vorzugsweise in entsprechender Weise federelastisch einstellbar ist.

Die Verbindung der Druckplatte mit der Bremseinrichtung erfolgt in vorteilhafter weiterer Ausgestaltung der Erfindung über in Umfangsrichtung mit Abstand voneinander angeordnete vertikale Schaltbolzen, die in Richtung auf die Bremseinrichtung, d.h. aufwärts, federnd vorgespannt in der Druckplatte gehalten sind. Zur Durchführung eines Bremsvorgangs erfolgt dabei der Eingriff der Schaltbolzen in in Umfangsrichtung verlaufende Langlöcher der die Bremsscheibe haltenden Mitnehmereinrichtung.

Für eine gleichmäßige Abbremsung innerhalb kurzer Zeit, die das nachlaufende, von der Antriebsverbindung gelöste Mähwerkzeug in etwa 5 sec oder, bei größeren Mähwerkzeugen, auch bis etwa 20 sec zum Stillstand bringen kann, ist vorzugsweise auf der horizontalen Oberseite des Ringscheibenteils des Freilaufs eine Sperrscheibe angeordnet, die die Mitnehmerbolzen des Freilaufs am Ende ihrer beim Stillsetzen der Antriebswelle einsetzenden aufwärtsgerichteten Hubbewegung, wenn die Mitnehmerbolzen ihre Bremsposition einnehmen, arretiert. Die mit dem Antriebszahnrad für das Mähwerkzeug aufgrund dessen Schwungmasse nachlaufenden Getriebeteile oberhalb der horizontalen Ringscheibe des Freilaufs laufen damit ohne Veränderung ihrer Umlaufebene um und erzielen so eine gleichmäßige Bremswirkung der mitlaufenden Bremsscheibe an der gehäusefesten Bremsgegeneinrichtung.

Weitere Merkmale und Vorteile der Erfindung ergeben sich aus der nachstehenden Beschreibung und der Zeichnung, in der ein bevorzugtes Ausführungsbeispiel des Gegenstands der Erfindung schematisch veranschaulicht ist. In der Zeichnung zeigt:
- Fig. 1: eine Draufsicht auf eine Mähmaschine mit insgesamt acht Mähvorrichtungen, die nach der Erfindung mit einer Bremseinrichtung ausgestattet sind,
- Fig. 2: einen Schnitt nach der Linie II-II der Fig. 1,
- Fig. 3: in ihrem unteren Teil eine perspektivische Gesamtansicht des Getriebes für das Mähwerkzeug und in ihrem oberen Teil in vergrößertem Maßstab eine perspektivische Darstellung der vom Getriebegehäuse eingefaßten Getriebeteile,
- Fig. 4: eine perspektivische Darstellung des Freilaufs mit der Bremseinrichtung mit bereichsweise weggeschnitten dargestellten Teilen,
- Fig. 5: einen Vertikalschnitt durch die Anordnung nach Fig. 4, wobei sich die Mitnehmerbolzen des Freilaufs in Antriebsverbindung befinden,
- Fig. 6: einen auf ein Detail beschränkten Vertikalschnitt entsprechend Fig. 5 und
- Fig.7, 8: Schnittdarstellungen entsprechend den Fig. 5 und 6, wobei sich jedoch die Mitnehmerbolzen des Freilaufs in ihrer Bremsposition befinden.

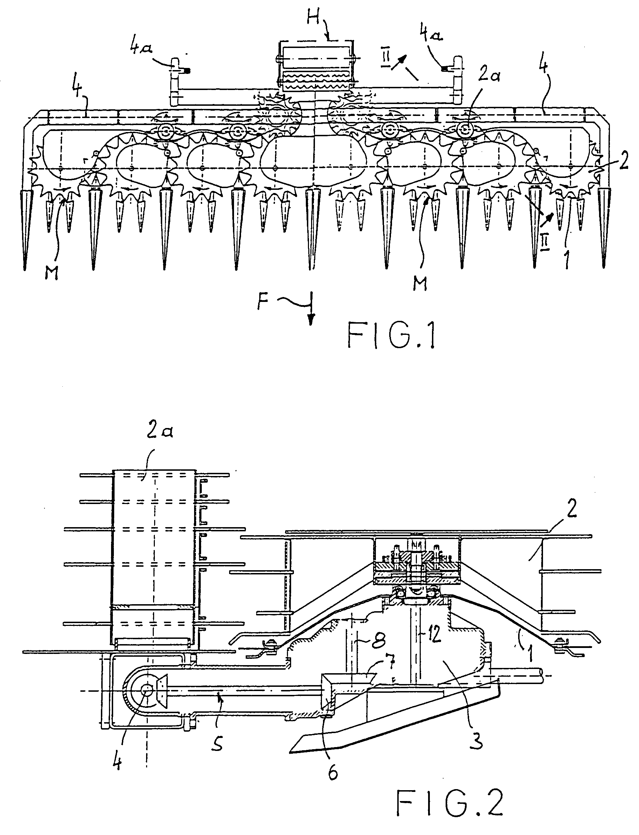

Die in Fig. 1 dargestellte, in Pfeilrichtung F vorbewegte Mähmaschine ist bei dem dargestellten Ausführungsbeispiel als Anbaugerät für einen Schlepper ausgebildet und umfaßt dabei, als Beispiel, insgesamt acht Mähvorrichtungen M, von denen vier auf der einen und vier auf der anderen Seite einer vertikalen Längsmittelebene der Maschine angeordnet sind. Die Mähvorrichtungen M sind in Fahrtrichtung F einem nur mit seinen vorgeordneten Einschubwalzen angedeuteten Häcksler H vorgeordnet, der bei dem dargestellten Beispiel in Verbindung mit den Mähvorrichtungen M eine Erntemaschineneinheit, z.B. einen sogenannten Mais-Mäh-Häcksler, bildet.

Jede Mähvorrichtung M besitzt ein umlaufendes Mähwerkzeug 1 in Form eines Kreismessers bzw. sog. Sägerotors und ist bei dem dargestellten Maschinentyp mit einer langsam laufenden Einzugtrommel 2 kombiniert. Für die Querförderung des geschnittenen Ernteguts zum Häcksler H hin sind außerdem Querfördertrommeln 2a vorgesehen.

Der Antrieb sowohl des Mähwerkzeugs 1 als auch der Einzugstrommel 2 erfolgt über ein Getriebe 3 von einer Hauptantriebswelle 4 über ein Winkelgetriebe 5 mit endseitigen, miteinander kämmenden Kegelrädern 6 und 7 auf eine vertikale Antriebswelle 8. Je eine horizontale Hauptantriebswelle 4 zu beiden Seiten der vertikalen Längsmittelebene der Maschine ist über ein Stirnradgetriebe 4a an das Zentralgetriebe des Häckslers H angeschlossen, von dem sie ihren Antrieb erhält.

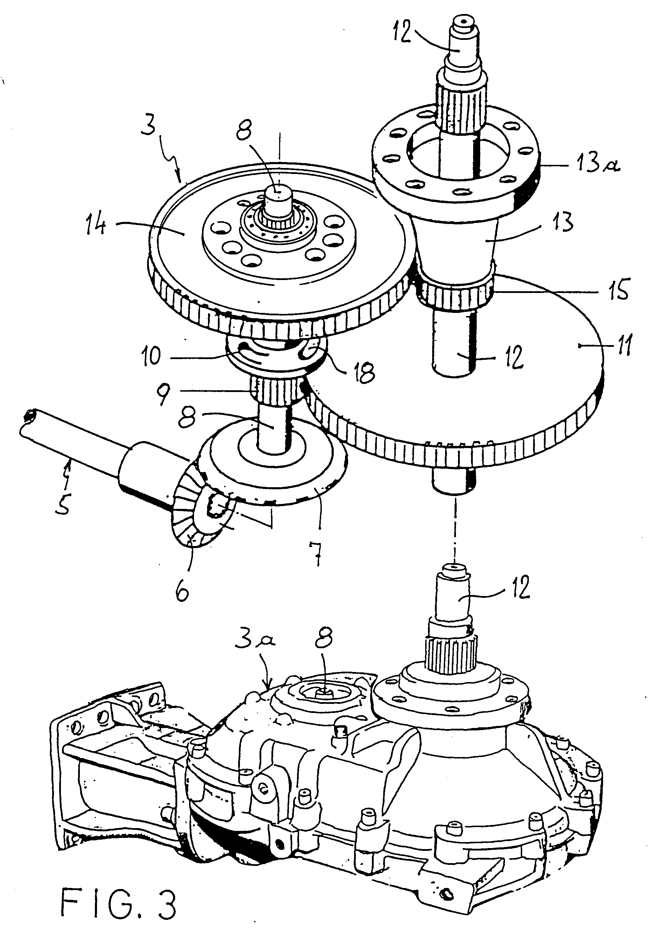

Das Getriebe 3 ist mit weiteren Einzelheiten mitsamt seinem Getriebegehäuse 3a aus Fig. 3 ersichtlich. Auf der vertikalen Welle 8 oberhalb des Kegelrades 7 des Winkelgetriebes 5 sitzt ein kleines Zahnrad 9 und ein Freilauf 10, der seinerseits drehfest mit der Welle 8 verbunden ist. Das Zahnrad 9 kämmt mit einem Zahnrad 11 auf einer Welle 12 als Antriebswelle für die Einzugstrommel 2, die am oberen Ende der Welle 12 befestigt wird. Auf dem Freilauf 10 sitzt ein weiteres Zahnrad 14 großen Durchmessers, das mit einem Zahnrad 15 kleinen Durchmessers für den schnellen Antrieb des Mähwerkzeugs 1 kämmt. Das Zahnrad 15 sitzt auf einer Hohlwelle 13 mit einem Flansch 13a an ihrem oberen Ende zur Befestigung des Mähwerkzeugs 1.

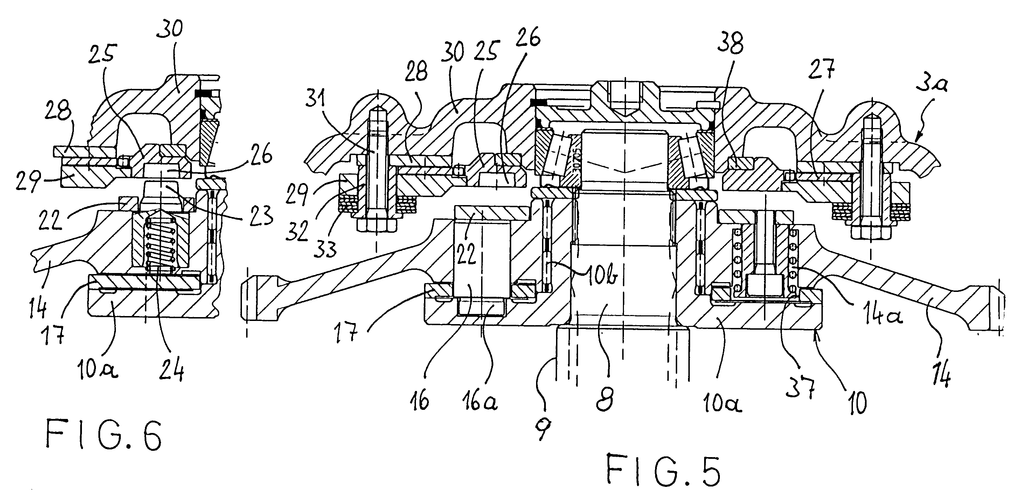

In gleichmäßigem Winkelabstand auf der horizontalen Ringscheibe 10a des Freilaufs 10 sind drei Mitnehmerbolzen 16 angeordnet, die einen unteren Ansatz 16a verkleinerten Durchmessers besitzen und mit einer Sperrscheibe 17 zusammenwirken, die auf die Ringscheibe 10a aufgelegt ist. Die Sperrscheibe 17 ist etwa um 15° schwenkbeweglich am Zahnrad 14 festgelegt. Hierzu ist in das Zahnrad 14 von unten ein Bolzen 17a eingeschraubt, der in ein in Umfangsrichtung der Sperrscheibe 17 gekrümmtes Langloch 17b von entsprechender Länge eingreift. Die Mitnahmebolzen 16 greifen in ihrer Mitnahmeverbindung mit dem Freilauf 10, wie sie insbesondere aus Fig. 5 ersichtlich ist, mit ihren unteren Ansätzen 16a in drei mit entsprechendem Winkelabstand in der Ringscheibe 10a angeordneten, bodenseitig mit Rampen 18b versehenen Kurvenbahnen 18 an deren tiefstem Endpunkt 18a ein. Die Rampen 18b münden an ihrem dem Ende 18a gegenüberliegenden Ende auf der Oberfläche der Ringscheibe 10a aus.

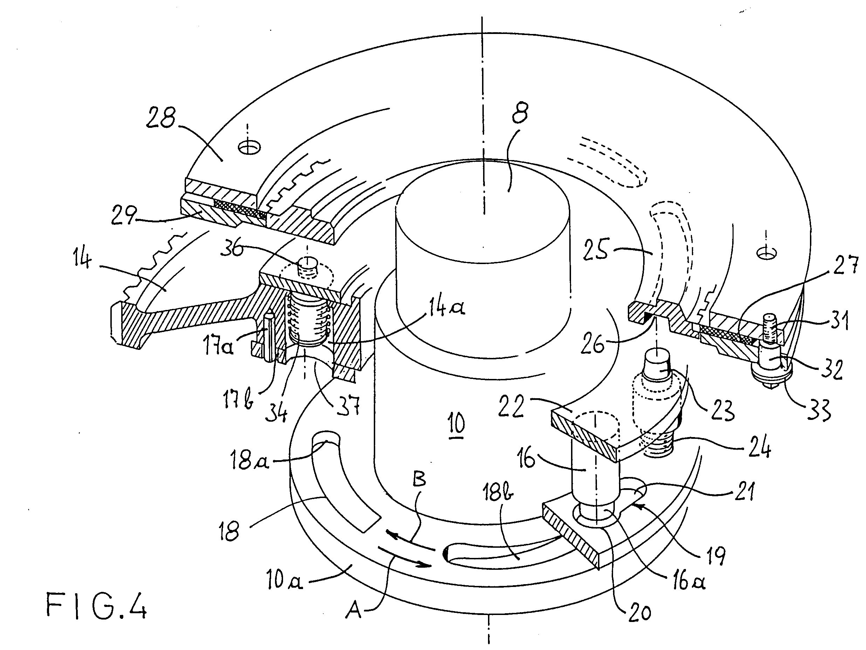

Die Drehrichtung des Freilaufs 10 im von der Hauptantriebswelle 4 über das Winkelgetriebe 5 angetriebenen Zustand ist durch den Pfeil A in Fig. 4 kenntlich gemacht, während bei einer Unterbrechung des Antriebs und dem damit einhergehenden Stillsetzen des Freilaufs 10 die Drehrichtung des aufgrund seiner Schwungmasse nachlaufenden Mähwerkzeugs 1 durch den Bewegungspfeil B kenntlich gemacht ist. Wenn bei Stillstand des Freilaufs 10 das Mähwerkzeug 1 mit den mit ihm verbundenen Antriebsteilen in Pfeilrichtung B nachläuft, wandern die drei Mitnehmerbolzen oder -nocken 16 in ihren Kurvenbahnen 18 auf den Rampen 18b nach oben auf die Oberfläche der Ringscheibe 10a, wobei sie jedoch unterseitig in je einer Arretierungsnut 19 der Sperrscheibe 17 gefangen sind.

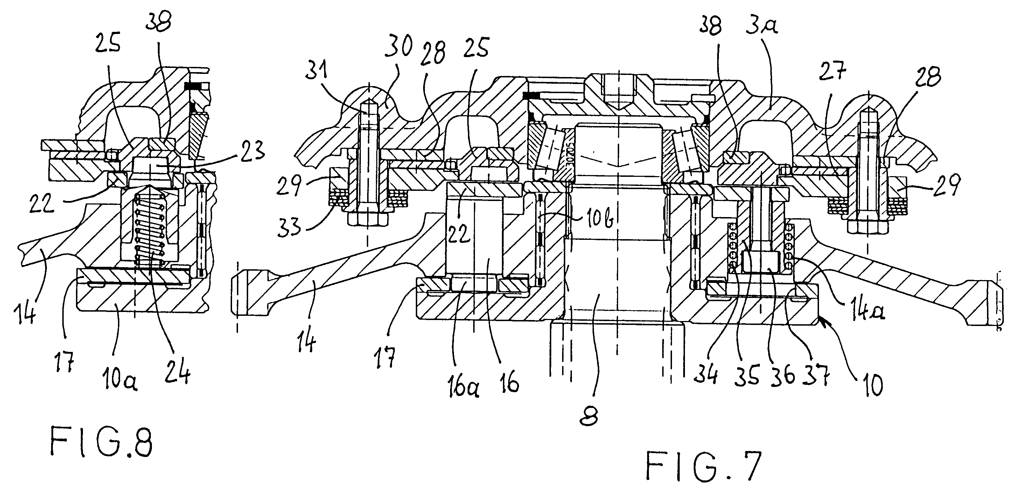

Die Arretierungsnuten 19 sind in entsprechenden Winkelabständen als Durchgangsöffnungen auf der Sperrscheibe 17 verteilt angeordnet. Jede Arretierungsnut 19 hat einen erweiterten Teil 20, der, wie aus Fig. 5 ersichtlich, den Mitnehmerbolzen 16 aufnehmen kann, und einen sich an diesen anschließenden verengten Teil 21, in den der Ansatz 16a des Mitnehmerbolzens 16 hineingeschoben wird. Der Ansatz 16a bewirkt in Verbindung mit der Langlochverengung 21, daß der jeweilige Mitnehmerbolzen 16 in seiner angehobenen Position, wie sie insbesondere aus Fig. 7 ersichtlich ist, arretiert ist. Diese nachlaufende Drehbewegung wird im übrigen in an sich bekannter Weise durch ein in den Fig. 5 bis 8 angedeutetes Nadellager 10b zwischen dem vertikalen Teil des Freilaufs 10 und der angrenzenden inneren Umfangsfläche des Zahnrads 14 ermöglicht.

Mit der Hubbewegung der Mitnehmerbolzen 16 aus der Antriebsposition gemäß Fig. 5 in die angehobene Position gemäß Fig. 7 wird eine an der Oberseite der Mitnehmerbolzen 16 anliegende ringförmige Druckplatte 22 angehoben, die drehfest, jedoch axial beweglich mit dem Zahnrad 14 verbunden ist. Die Druckplatte 22 ist mit drei in gleichmäßigem Winkelabstand verteilt angeordneten Schaltbolzen 23 ausgerüstet, die durch je eine Druckfeder 24 ständig gegen die Druckplatte 22 vorgespannt sind. Beim Anheben der Druckplatte 22 durch die Mitnehmerbolzen 16 kommen die Schaltbolzen 23 in Mitnahmeeingriff mit einem Mitnehmerring 25, indem sie in in dessen Unterseite eingearbeitete in Umfangsrichtung bogenförmige Langlöcher 26 eintreten, an denen sie bei der Nachlaufbewegung der nachlaufenden Getriebeteile in Richtung des Pfeils B endseitig zur Anlage kommen. Diese Betriebsposition ist insbesondere aus den Fig. 7 und 8 ersichtlich, in denen das nachlaufende Zahnrad 14 mit dem Mitnehmerring 25 durch die Schaltbolzen 23 gekuppelt ist. In den Fig. 6 und 8 sind die Schaltbolzen 23 teilweise geschnitten dargestellt, so daß die in einem inneren Hohlraum des Schaltbolzens 23 untergebrachte Druckfeder 24 und ihre unterseitige Abstützung auf der Sperrscheibe 17 zur Darstellung kommen.

Die Bremseinrichtung umfaßt bei dem dargestellten Beispiel eine ringförmige Bremsscheibe 27 aus einem für diese Zwecke geeigneten verschleißfesten Werkstoff, die an ihrem inneren Umfangsrand mit dem äußeren Umfangsrand des Mitnehmerringes 25 über eine ineinandergreifende Verzahnung fest verbunden ist. Ferner umfaßt die Bremseinrichtung zwei zwischen sich einen horizontalen Ringspalt belassende Bremsgegenscheiben 28 und 29. Die Bremsgegenscheiben 28 und 29 sind mit einem oberen Gehäuseteil 30 des Getriebegehäuses 3a durch Befestigungsbolzen 31 über Verkantungen vermeidende Abstandhalterbuchsen 32 unter Ausbildung des die Bremsscheibe 27 aufnehmenden Ringspaltes verschraubt.

Die Verschraubung erfolgt über um die Buchsen 32 gelegte Tellerfedern 33, die eine federelastische Einstellung der Spaltbreite und damit des Bremsmomentes entsprechend der durch das Mähwerkzeug 1 bestimmten Schwungmasse ermöglichen. Je enger der zwischen den Bremsgegenscheiben 28 und 29 gebildete Ringspalt ist, desto größer ist die auf die durchlaufende Bremsscheibe 27 ausgeübte Bremswirkung.

Das Lösen der Bremse durch Absenken der Druckplatte 22 erfolgt automatisch, wenn der Hauptantrieb wieder anläuft, bei dem dargestellten Beispiel vom Schlepper aus wieder Gas gegeben wird, mit der Folge, daß über die Welle 4 und das Winkelgetriebe 5 die Welle 8 und damit der Freilauf 10 in Richtung des Pfeils A angetrieben wird. Durch Reibschluß zwischen der Sperrscheibe 17 und der Ringscheibe 10a des Freilaufs 10 wird die Sperrscheibe 17 in Richtung A mitgenommen, wodurch die Mitnahmebolzen 16 aus der Verengung 21 der Arretierungsnuten 19 in den erweiterten Nutteil 20 zurückgleiten. Durch den erweiterten Nutteil 20 fallen die Mitnahmebolzen 16 nach unten in die jeweilige Kurvenbahn 18 und gleiten in dieser auf der Rampe 18b abwärts bis zum Nutende 18a, so daß durch Formschlußeingriff der Mitnahmebolzen 16 mit dem Freilauf 10 wieder der Antrieb des Mähwerkzeugs 1 entsprechend dem Umlaufpfeil A erfolgt.

Die Abwärtsbewegung der Mitnehmerbolzen 16 mit der Druckplatte 22 wird unterstützt durch Rückholfedern 34, die in Bohrungen 14a des Zahnrades 14 untergebracht sind. Bei dem dargestellten Beispiel sind drei in gleichmäßigem Winkelabstand voneinander angeordnete Bohrungen 14a im Zahnrad 14 vorgesehen. Die Druckfedern 34 stützen sich an ihrem oberen Ende an einem zum Bohrungsinneren hin gerichteten Ringansatz des Zahnrads 14 und an ihrem unteren Ende an einem entsprechenden zum Bohrungsäußeren hin gerichteten Ansatz einer in die Bohrung 14a eingesetzten Buchse 35 ab, die auf diese Weise mit dem Innenumfang der Bohrung 14a einen die Rückholfeder 34 aufnehmenden Ringspalt bildet. Über die Buchsen 35 ist das Zahnrad 14 mit der Druckplatte 22 jeweils durch eine sich durch die Buchse 35 hindurcherstreckende und in die Druckplatte 22 eingeschraubte Schraube 36 verbunden, wobei die Buchsen 35 in ihren Bohrungen 14a axial beweglich gehalten sind. Gegenüber den Bohrungen 14a sind in der Sperrscheibe 17 Bohrungen 37 eingearbeitet, die gegenüber den Kreisbohrungen 14a beidendig in Umfangsrichtung entsprechend dem Drehbewegungsspiel von etwa 15° der Sperrscheibe 17 verlängert sind.

In der insbesondere aus Fig. 5 ersichtlichen Antriebsstellung der Mitnehmerbolzen 16 liegen die Buchsen 35 mit ihren unteren Enden in den Bohrungen 37 der Sperrscheibe 17 und mit ihren oberen Enden in einer mit der oberen horizontalen Ringfläche des Zahnrads 14 gemeinsamen Ebene, in der in diesem Betriebszustand auch die Druckplatte 22 liegt. Bei der oben beschriebenen Hubbewegung der Mitnehmerbolzen 16 unter Mitnahme der Druckplatte 22 werden die Buchsen 35 unter Komprimierung der Rückholfedern 34 mit nach oben in die aus Fig. 7 ersichtliche Stellung bewegt. Bei der Abwärtsbewegung der Mitnehmerbolzen 16 entspannen sich die Rückholfedern 34 und führen die Druckplatte 22 in die in Fig. 5 dargestellte Position zurück, wobei gleichzeitig auch die Schaltbolzen 23 aus den Langlöchern 26 des Mitnehmerringes 25 herausgezogen werden. Die Bremseinrichtung ist damit außer Betrieb.

Das in das Getriebegehäuse 3a eingekapselte Getriebe 3 läuft flüssigkeitsgeschmiert, wobei zwischen dem oberen Gehäuseteil 30 und dem Mitnehmerring 25 ein Gleitlager 38 vorgesehen ist.

## Patentansprüche

1. Mähvorrichtung mit einem um eine vertikale Achse umlaufenden Mähwerkzeug (1), das über ein einen Freilauf (10) umfassendes, in einem Getriebegehäuse (3a) untergebrachtes Getriebe (3) von einer drehfest mit dem Freilauf (10) verbundenen Antriebswelle (8) über Mitnehmerbolzen (16) antreibbar ist, die in zur Drehachse des Mähwerkzeugs (1) paralleler Grundausrichtung eine Mitnahmeverbindung zwischen dem Freilauf (10) und dem Mähwerkzeug (1) für dessen Antrieb herstellen und bei einem Stillsetzen der Antriebswelle (8) mitsamt dem Freilauf (10) eine Hubbewegung ausführen, die die Mitnahmeverbindung des Mähwerkzeugs (1) mit dem Freilauf (10) unterbricht, **dadurch gekennzeichnet**, daß die Mitnehmerbolzen (16) bei ihrer Hubbewegung eine Bremseinrichtung (27, 28, 29) aktivieren, die im Bereich der Innenseite des Getriebegehäuses (3a) oberhalb des Freilaufs (10) gebildet ist.

2. Mähvorrichtung nach Anspruch 1, dadurch gekennzeichnet, daß auf der Oberseite der Mitnehmerbolzen (16) eine ringförmige Druckplatte (22) angeordnet ist, die gegen die Bremseinrichtung (27,28,29) auf der Innenseite des Getriebegehäuses (3a) bewegbar ist.

3. Mähvorrichtung nach Anspruch 1 oder 2, dadurch gekennzeichnet, daß die Bremseinrichtung (27,28,29) zur Erzeugung unterschiedlicher Bremsmomente federelastisch einstellbar ausgebildet ist.

4. Mähvorrichtung nach einem der Ansprüche 1 bis 3, dadurch gekennzeichnet, daß die Bremseinrichtung (27,28,29) eine ringförmige horizontale Bremsscheibe (27) umfaßt, die an ihrem Innenumfang mit einem antriebsseitigen Mitnehmerglied (25) fest verbunden ist und mit einem von ihrem Außenumfang ausgehenden Ringbereich in einem Ringspalt zwischen zwei gehäuseseitigen horizontalen Bremsgegenscheiben (28,29) geführt ist.

5. Mähvorrichtung nach einem der Ansprüche 1 bis 3, dadurch gekennzeichnet, daß die Bremseinrichtung eine entsprechend dem Innenumfang des Getriebegehäuses (3a) gekrümmte ringförmige Bremsscheibe umfaßt, die mit einem Antriebsglied des Mähwerkzeugs (1) kuppelbar und mit einer Bremsgegenfläche am Innenumfang des Getriebegehäuses (3a) in Bremseingriff bringbar ist.

6. Mähvorrichtung nach einem der Ansprüche 2 bis 5, dadurch gekennzeichnet, daß die Druckplatte (22) mit der Bremseinrichtung (27,28,29) über in Umfangsrichtung mit Abstand voneinander angeordnete vertikale Schaltbolzen (23) verbindbar ist.

7. Mähvorrichtung nach Anspruch 6, dadurch gekennzeichnet, daß die Schaltbolzen (23) in Richtung auf die Bremseinrichtung (27,28,29) federnd vorgespannt in der Druckplatte (22) gehalten sind.

8. Mähvorrichtung nach Anspruch 7, dadurch gekennzeichnet, daß die Schaltbolzen (23) zur Durchführung eines Bremsvorgangs mit in Umfangsrichtung verlaufenden Langlöchern (26) des die Bremsscheibe (27) haltenden Mitnehmerglieds (25) in Eingriff bringbar sind.

9. Mähvorrichtung nach einem der Ansprüche 1 bis 8, dadurch gekennzeichnet, daß auf der horizontalen Oberseite eines Ringscheibenteils (10a) des Freilaufs (10) eine Sperrscheibe (17) angeordnet ist, die die Mitnehmerbolzen (16) am Ende ihrer aufwärts gerichteten Hubbewegung in ihrer Bremsposition arretiert.

10. Mähvorrichtung nach Anspruch 9, dadurch gekennzeichnet, daß die Sperrscheibe (17) um einen begrenzten Winkelbetrag schwenkbeweglich an einem Antriebsglied (14) des Mähwerkzeugs (1) festgelegt ist.

11. Mähvorrichtung nach einem der Ansprüche 1 bis 10, dadurch gekennzeichnet, daß die Bremseinrichtung (27,28,29) bei einer erneuten Antriebsbetätigung der Mähvorrichtung (1) unter Absenken der Druckplatte (22) selbsttätig losbar ist.

12. Mähvorrichtung nach Anspruch 11, dadurch gekennzeichnet, daß das Absenken der Druckplatte (22) und die damit verbundene Abwärtsbewegung der Mitnehmerbolzen (16) in ihre Antriebsstellung durch Federbeaufschlagung unterstützt ist.

## Claims

1. A mowing apparatus with, rotating about a vertical axis, a mowing tool (1) adapted to be driven via drive bolts (16) by a drive shaft (8) rotationally rigidly connected to the freewheeling arrangement (10) via a gear mechanism (3) accommodated in a gear box (3a) and comprising the said freewheeling device (10), said drive bolts (16), in a basic orientation parallel with the axis of rotation of the mowing tool (1), establishing a driving connection between the freewheeling arrangement (10) and the mowing tool (1) for driving the latter and, upon stoppage of the drive shaft (8) together with the freewheeling arrangement (10), performing a lifting movement which interrupts the driving connection of the mowing tool (1) to the freewheeling arrangement (10), characterised in that upon their lifting movement, the drive bolts (16) activate braking means (27, 28, 29) formed in the region of the inside of the gearbox (3a) of the freewheeling arrangement (10).

2. A mowing apparatus according to claim 1, characterised in that there is on the top of the drive bolt (16) an annular thrust plate (22) adapted for movement on the inside of the gearbox (3a) and against the braking means (27, 28, 29).

3. A mowing apparatus according to claim 1 or 2, characterised in that the braking means (27, 28, 29) are constructed to be springingly and elastically adjustable in order to generate different braking moments.

4. A mowing apparatus according to one of claims 1 to 3, characterised in that the braking means (27, 28, 29) comprise an annular horizontal brake disc (27) which is rigidly connected at its periphery to a drive-side entraining member (25), an annular zone emanating from its outer periphery being guided in an annular gap between two horizontal brake discs (28, 29) on the housing side.

5. A mowing apparatus according to one of claims 1 to 3, characterised in that the brake means comprise an annular brake disc which is curved to match the inner periphery of the gearbox (3a) and which is adapted to be coupled to a drive member of the mowing tool (1) and to be brought into braking engagement with a mating braking surface on the inner periphery of the gearbox (3a).

6. A mowing apparatus according to one of claims 2 to 5, characterised in that the thrust plate (22) can be connected to the braking means (27, 28, 29) via vertical indexing pins (23) disposed at intervals from one another in the peripheral direction.

7. A mowing apparatus according to claim 6, characterised in that the indexing pins (23) are supported in the thrust plate (22) in such a way that they are resiliently pretensioned in the direction of the braking means (27, 28, 29).

8. A mowing apparatus according to claim 7, characterised in that the indexing pins (23) for carrying out a braking process can be brought into engagement with peripherally extending elongated holes (26) of the drive member (25) supporting the brake disc (27).

9. A mowing apparatus according to one of claims 1 to 8, characterised in that on the horizontal upper face of an annular disc part (10a) of the freewheeling device (10) there is a locking disc (27) which arrests the drive bolts (16) in their braking position at the end of their upwardly directed travelling movement.

10. A mowing apparatus according to claim 9, characterised in that the locking disc (17) is fixed on a drive member (14) of the mowing tool (1) in such a way that it is pivotally movable through a limited angle.

11. A mowing apparatus according to one of claims 1 to 10, characterised in that upon a renewed driving actuation of the mowing apparatus (1), the braking means (27, 28, 29) are automatically releasable, the thrust plate (22) being lowered.

12. A mowing apparatus according to claim 11, characterised in that the lowing of the thrust plate (22) and the downwards movement of the drive bolts (16) into their driving position which this entails is assisted by spring action.

## Revendications

1. Appareil faucheur muni d'un outil de fauchage (1) tournant autour d'un axe vertical, qui peut être entrainé, par l'entremise d'une transmission (3) comprenant une roue libre (10) et logée dans un boîtier de transmission (3a), par un arbre d'entraînement (8) relié à la roue libre (10) de manière fixe au moyen de broches d'entraînement (16) qui établissent, dans un alignement de base parallèle à l'axe de rotation de l'outil de fauchage (1), une liaison d'entraînement entre la roue libre (10) et l'outil de fauchage (1) pour entraîner celui-ci et effectuent, lors d'un arrêt de l'arbre d'entraînement (8) conjointement avec la roue libre (10) un déplacement en hauteur qui interrompt la liaison d'entraînement de l'outil de fauchage (1) avec la roue libre (10), caractérisé en ce que les broches d'entraînement (16) activent, dans leur déplacement en hauteur, un dispositif de freinage (27, 28, 29), qui est formé dans la zone de la partie interne du boîtier de transmission (3a) au-dessus de la roue libre (10).

2. Appareil faucheur selon la revendication 1, caractérisé en ce que l'on agence sur la partie supérieure des broches d'entraînement (16) une plaque de compression annulaire (22), qui peut être déplacée contre le dispositif de freinage (27, 28, 29) sur la partie interne du boîtier de transmission (3a).

3. Appareil faucheur selon la revendication 1 ou 2, caractérisé en ce que le dispositif de freinage (27, 28, 29) est conformé de manière à être réglable élastiquement pour produire différents couples de freinage.

4. Appareil faucheur selon l'une quelconque des revendications 1 à 3, caractérisé en ce que le dispositif de freinage (27, 28, 29) comprend un disque de frein horizontal annulaire (27), qui est solidement relié, sur sa périphérie interne, à un élément d'entraînement (25) côté entraînement et est guidé par une zone annulaire partant de sa périphérie externe dans une fente annulaire entre deux contre-disques de frein (28, 29) horizontaux côté boîtier.

5. Appareil faucheur selon l'une quelconque des revendications 1 à 3, caractérisé en ce que le dispositif de freinage comprend un disque de frein annulaire incurvé en fonction de la périphérie interne du boîtier de transmission (3a), qui peut être couplé à un élément d'entraînement de l'outil de fauchage (1) et peut être amené en engagement de freinage avec une contre-surface de frein sur la périphérie interne du boîtier de transmission (3a).

6. Appareil faucheur selon l'une quelconque des revendications 2 à 5, caractérisé en ce que la plaque de compression (22) peut être reliée au dispositif de freinage (27, 28, 29) via des broches d'accouplement (23) verticales agencées dans la direction périphérique à distance l'une de l'autre.

7. Appareil faucheur selon la revendication 6, caractérisé en ce que les broches d'accouplement (23) sont maintenues sous tension préalable élastique dans la plaque de compression (22) dans la direction du dispositif de freinage (27, 28, 29).

8. Appareil faucheur selon la revendication 7, caractérisé en ce que les broches d'accouplement (23) peuvent être amenées en engagement, au cours de la réalisation d'une opération de freinage, avec des orifices allongés (26) s'étendant dans la direction périphérique de l'élément d'entraînement (25) maintenant le disque de frein (27).

9. Appareil faucheur selon l'une quelconque des revendications 1 à 8, caractérisé en ce que l'on agence sur la face supérieure horizontale d'une partie de disque annulaire (10a) de la roue libre (10) un disque d'arrêt (17), qui arrête les broches d'entraînement (16) à la fin de leur déplacement en hauteur dirigé vers le haut dans leur position de freinage.

10. Appareil faucheur selon la revendication 9, caractérisé en ce que le disque d'arrêt (17) est fixé de manière à pouvoir pivoter d'un angle limité sur un élément d'entraînement (14) de l'outil de fauchage (1).

11. Appareil faucheur selon l'une quelconque des revendications 1 à 10, caractérisé en ce que le dispositif de freinage (27, 28, 29) peut être dégagé automatiquement lors d'une nouvelle commande d'entraînement de l'appareil faucheur (1) en abaissant la plaque de compression (22).

12. Appareil faucheur selon la revendication 11, caractérisé en ce que l'abaissement de la plaque de compression (22) et le déplacement vers le bas des broches d'entraînement (16) qui lui est lié dans leur position d'entraînement est soutenu par une sollicitation élastique.
